# EUROPÄISCHE PATENTSCHRIFT

(11) **EP 1 021 055 B1**
(45) Veröffentlichungstag und Bekanntmachung des Hinweises auf die Patenterteilung: **02.04.2003**
(21) Anmeldenummer: 00100480.3
(22) Anmeldetag: 11.01.2000
(51) Int. Cl.: H04Q 7/36, H04B 17/00

(54) **Verfahren zur Erfassung von Kenndaten eines Mobilfunknetzes**
Method for acquiring the characteristics of a mobile radio network
Procédé d'enregistrement de données caractéristiques d'un réseau radiotéléphonique mobile

(30) Priorität: 11.01.1999 DE 19900543
(43) Veröffentlichungstag der Anmeldung: 19.07.2000
(73) Patentinhaber: T-Mobile Deutschland GmbH, 53227 Bonn (DE)
(72) Erfinder: Brücken, Reinhold, 50937 K-ln (DE); Zingler, Olaf, 53639 K-nigswinter (DE)
(74) Vertreter: Riebling, Peter, Dr.-Ing.

(56) Entgegenhaltungen:
- EP-A- 0 544 635
- EP-A- 0 619 687
- EP-A- 0 946 007
- DATABASE INSPEC [Online] INSTITUTE OF ELECTRICAL ENGINEERS, STEVENAGE, GB; EVANS T F: "Cellemetry/sup sm/-telemetry via cellular" Database accession no. 5533005 XP002166295 & VIRGINIA TECH'S SIXTH SYMPOSIUM ON WIRELESS PERSONAL COMMUNICATIONS. PROCEEDINGS, PROCEEDINGS OF 6TH VIRGINIA TECH SYMPOSIUM ON WIRELESS PERSONAL COMMUNICATIONS, BLACKSBURG, VA, USA, 5-7 JUNE 1996, Seiten 1/1-9, 1996, Blacksburg, VA, USA, Virginia Tech, USA

## Beschreibung

Die Erfindung betrifft ein Verfahren zur Erfassung von Kenndaten eines Mobilfunknetzes nach dem Oberbegriff des Patentanspruchs 1.

Zur Überwachung der Qualität von Mobilfunknetzen sind aktuelle Messdaten notwendig. Die Auswertung dieser Meßdaten ermöglicht eine gezielte Optimierung bzw. Verbesserung der Qualität des Netzes, indem z.B. die Funkversorgung in bestimmten Gebieten verbessert wird. Bisher werden mit geeigneten, mobilen Meßsystemen mehr oder weniger gezielt bestimmte Straßenzüge bzw. Gebiete meßtechnisch erfaßt. Die zu untersuchenden Gebiete werden z.B. anhand von Qualitätsinformationen von Teilnehmern ausgewählt. Diese Lösungen sind jedoch unbefriedigend, da die Mobilfunkteilnehmer schlechte Netzqualitäten nicht immer melden und die Anzahl der Meßfahrzeuge begrenzt ist. Eine flächendeckende Erfassung der Netzqualität ist nicht möglich.

Ein Verfahren zur Messung der Übertragungsqualität in Zellen von Mobilfunknetzen ist aus dem nachveröffentlichten Dokument EP-A-0 946 007 mit älterem Zeitrang bekannt. Die zu messende Zelle wird unter Verwendung einer mobilen Station und eines GPS-Empfängers durchfahren, wobei zu bestimmten Zeitpunkten die Position und die aktuelle Zeit erfasst werden. Vorzugsweise zu diesen bestimmten Zeitpunkten erfolgt ein automatischer Verbindungsaufbau zwischen der mobilen Station und einer zentralen Mobilfunk-Analyseeinrichtung. Die aktuellen Verbindungsdaten sowie die erfassten GPS- und Zeitdaten werden an die Mobilfunk-Analyseeinrichtung übertragen und dort ausgewertet. Wie es weiter oben bereits allgemein geschildert wurde, werden auch hier spezielle mobile Stationen vorzugsweise in Fahrzeugen fest installiert und bewegen sich mit diesen Fahrzeugen durch die Zellen. Von diesen mobilen Stationen werden zu den vorgegebenen Zeiten Messwerte an eine zentrale Mobilfunk-Analyseeinrichtung übertragen.
Ein ähnliches Verfahren ist in der EP-A-0 619 687 offenbart.
Bei den beschriebenen Verfahren besteht ein erheblicher Aufwand für die Installation und Wartung der mobilen Messstationen, sowie für die zeitnahe Abfrage der Messdaten. Auch kann durch die ständige Abfrage der Messwerte der reguläre Mobilfunkbetrieb beeinträchtigt werden.

Die EP-A-0 748 727 offenbart ein Sicherheitssystem für Fahrzeuge, bei dem die Position eines zu überwachenden Fahrzeugs beispielsweise mittels eines Positionserfassungssystems (GPS) erfasst und vorzugsweise über den Kurznachrichtendienst (SMS) eines Mobilkommunikationssystems zur Auswertung an ein Kontrollzentrum gesendet wird. Es werden weder Kenndaten des Mobilfunksystems erfasst, noch sind Maßnahmen zur Reduktion der zu übertragenden Datenmenge vorgesehen.
Aus der US-A-5 694 451 ist ein Verfahren zur Erfassung von Kenndaten eines Mobilfunksystems bekannt, bei dem die Kenndaten auf der Teilnehmerseite durch ein Mobilfunkendgerät erfasst und an das Mobilfunksystem übertragen und dort ausgewertet werden. Es sind keine Angaben über eine Erfassung von Positionsdaten enthalten. Auch sind keine Maßnahmen zur Reduktion der zu übertragenden Datenmenge beschrieben.

Die Aufgabe der vorliegenden Erfindung besteht deshalb darin, ein Verfahren zur Erfassung von Kenndaten eines Mobilfunknetzes vorzuschlagen, welches ohne Beeinträchtigung des Mobilfunkbetriebs eine aktuelle und flächendeckende Erfassung von Kenndaten erlaubt, wobei die Belastung des Mobilfunknetzes gering gehalten werden soll.

Die Lösung dieser Aufgabe erfolgt durch die im Patentanspruch 1 angegebenen Merkmale.
Vorteilhafte Ausgestaltungen und Weiterbildungen der Erfindung sind in den abhängigen Patentansprüchen angegeben.

Das beschriebene Verfahren beruht auf der Idee, die Kenn- und Verbindungsdaten von regulären Mobilfunkteilnehmern zu erfassen und diese zusammen mit einer Positionsinformation z.B. per SMS an eine entsprechende Datenerfassungszentrale zu übermitteln, ohne einen Verkehrskanal (TCH: Traffic Channel) zusätzlich zu belegen.

Das Verfahren beinhaltet demnach im wesentlichen die Schritte der Datengenerierung und Aufbereitung beim Mobilfunkteilnehmer/-system, der Übertragung der Information zu einer Datenerfassungszentrale und der Verarbeitung sowie Verwaltung der Meßdaten in der Zentrale.

Zur Datengenerierung wird ein Mobilfunkendgerät verwendet, das seine Meßdaten an einer externen Schnittstelle bereitstellt sowie ein Satellitennavigationsempfänger zur Positionsbestimmung. Alle anfallenden Daten (Kennwerte des Mobilfunksystems und die Positionsdaten) werden von einem teilnehmerseitigen Speicher- und Verarbeitungsmodul ausgewertet und über das Mobilfunkendgerät z.B. per SMS zur Erfassungszentrale gesendet.

Die aufgeführten Komponenten könnten einzeln aufgebaut und verschaltet werden, es ist jedoch sinnvoll bestehende Systeme so zu modifizieren, daß sie die o.a. Anwendung zusätzlich zur eigentliche Aufgabe durchführen können.

Alle bisherigen Meßsysteme benötigen zur Meßdatenaufnahme einen Verkehrskanal und blockieren diesen für andere Mobilfunkteilnehmer. Das erfindungsgemässe Verfahren liefert Meßdaten direkt vom Mobilfunkteilnehmer zusammen mit einem Ortsbezug. Die Meßdaten spiegeln das reale Teilnehmerverhalten wider.

Bei entsprechender Verbreitung des Systems können in vorbestimmten Gebieten, nach bestimmten Vorgaben, Meßdaten in kürzester Zeit flächendeckend generiert werden.

Miet- bzw. Personalkosten für die Durchführung der Messungen entfallen, und ebenso die Anschaffungskosten für Meßsysteme und Meßfahrzeuge.

Vorteilhaft kann das beschriebene Verfahren mit den bestehenden Datenerfassungs- und Verarbeitungsgeräten von Verkehrstelematikdiensten, deren Datengewinnung auf mobile Systeme in Kraftfahrzeugen beruhen, verknüpft werden. Diese Geräte enthalten u.a. ein Sensor zur Satellitenpositionsbestimmung und zur Datenübertragung, bzw. als Teil des Multifunktionsgerät (Navigationssystem, Telefon, Radio) eine Mobiltelefoneinheit. Werden die über die Telefoneinheit geführten Gespräche entsprechend dem aufgeführten Verfahren überwacht, könnte der in dem Navigationssystem enthaltene Computer (Speicher- und Verarbeitungsmodul) die Meßdaten zusätzlich verarbeiten. Die Zusatzaufgabe für den Rechner besteht aus dem Auslesen der Meßdaten und Initialisierungsparameter (z.B. Teil des CellBroadcast) an der Telefonschnittstelle, dem Vergleich der Meßdaten mit den Schwellenwerten und der Aufarbeitung der Daten für die Übertragung per SMS über die Mobilfunkeinheit an die Datenerfassungszentrale.

Eine andere Möglichkeit besteht in der Kombination des Verfahrens mit bestehenden Diebstahlsicherungssystemen für Fahrzeuge. Besonders hochwertige Fahrzeuge besitzen als Komplettierung ihrer Diebstahlschutzes ein System, daß die Fahrzeugposition über das GPS ermittelt und bei Bedarf an eine Sicherheitszentrale übermittelt. Stellt man Teilen dieser Benutzergruppe ein evtl. subventioniertes Mobilfunkgerät zur Verfügung, könnte man das erfindungsgemässe Verfahren in einem separaten Gerät umsetzen. Das Gerät müßte eine Schnittstelle zum Mobilfunkgerät, daß die notwendigen Daten an der Schnittstelle bereitstellt, sowie zum GPS-Empfänger, der die Satellitenposition ermittelt, besitzen. Zur Vergrößerung der Akzeptanz sollte das Gerät ähnlich einem herkömmliche Einbausatz für Mobilfunktelefone die Stromversorgung bzw. das Durchschleifen einer Außenantenne ermöglichen.

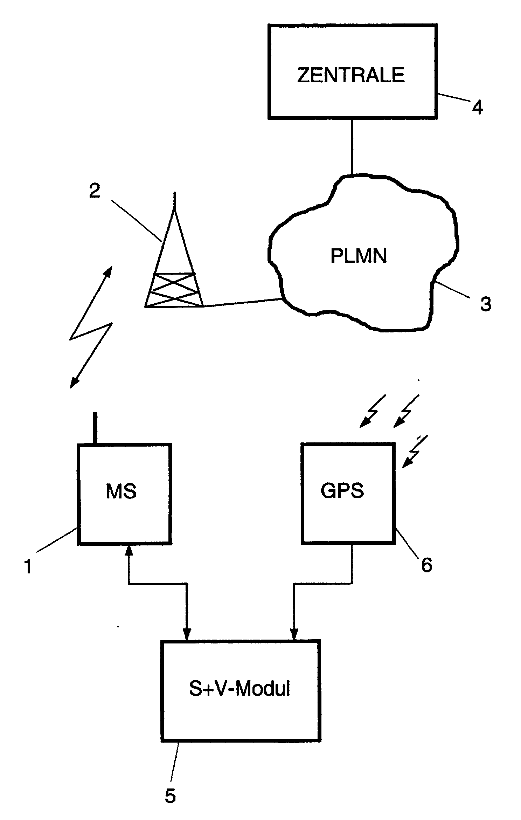

Nachfolgend wird die Erfindung anhand einer Zeichnungsfigur näher beschrieben. Dabei gehen aus der Zeichnung und ihrer Beschreibung weitere Einzelheiten und Vorteile der Erfindung hervor.

Die Zeichnung zeigt ein Mobilfunkendgerät 1 (MS), das in bekannter Weise über eine Basisstation 2 an das Mobilfunknetz 3 (PLMN) angebunden ist. Als Teil des Mobilfunknetzes 3 ist eine Datenerfassungszentrale 4 vorgesehen, die jedoch auch extern an das Mobilfunknetz angebunden sein kann. Erfindungsgemäß ist das Mobilfunkgerät 1 mit einer teilnehmerseitigen Speicher- und Verarbeitungseinheit 5 verbunden. Über ein Satellitennavigationssystem 6 empfängt die Speicher- und Verarbeitungseinheit 5 Positionsdaten über den augenblicklichen Aufenthaltsort des Mobilfunkteilnehmers.

### Mobilfunkendgerät 1:

Das Mobilfunkendgerät 1 muß über eine offengelegte Schnittstelle verfügen, an der die Meßdaten der Luftschnittstelle verfügbar sind. Die Daten werden sowohl im Bereitschaftsmodus (idle mode) als auch während einer Verbindung (connected mode) an die Speicher- und Verarbeitungseinheit 5 weitergeleitet.

Benutzt der Teilnehmer das Mobilfunktelefon 1, fallen bei einem Gespräch im Verbindungsmodus diverse Kennwerte des verwendeten Mobilfunksystems an. Sie sind vorhanden, weil das Mobilfunksystem 3 (z.B. GSM) diese Werte für den eigenen Betrieb benötigt. Diese Werte sind insbesondere die Empfangsfeldstärke (RxLEV) und die Empfangsqualität (RxQUAL). Allerdings wird beim GSM kein genauen Ortsbezug für diese Meßwerte hergestellt.
Für den geforderten Einsatz müssen diese Meß-/Kennwerte des Mobilfunksystems aus dem Telefon bzw. Telefonchip herausgeführt werden, was bei einigen Mobilfunkgeräteherstellern bereits umgesetzt worden ist.
Diese Daten sind dann Teil der Eingangsdaten, die dem Speicher- und Verarbeitungsmodul 5 zur Verfügung gestellt werden.

### Satellitennavigationssystem 6

Der Positionsbezug der Mobilfunkdaten wird über berechneten Koordinaten eines Satellitennavigationssempfängers 6 (z.B. GPS-Empfänger) hergestellt. Diese stellen dann eine weitere Eingangsgröße für das Speicher- und Verarbeitungsmodul 5 dar.

### Speicher- und Verarbeitungsmodul 5

Die Speicher- und Verarbeitungseinheit 5 ist das Kernstück bei der Umsetzung des neuen Verfahrens. In ihm werden die Meßdaten des Mobilfunkgeräts 1 gesammelt, ausgewertet, verdichtet, mit den GPS Daten zusammengefügt und vorzugsweise via Kurznachricht (SMS) an die Zentrale 4 gesandt.

Bei dieser Umsetzung würden während eines Gespräches ("connected mode") alle 480 ms zu übertragende Meßwerte anfallen. Die dadurch entstehende Menge vom Mobilfunknetz 3 zu übertragender Kurznachrichten (SMS), würde eine übermässige Belastung für das Netz darstellen. Deshalb ist es notwendig die anfallenden Daten zu reduzieren und ggf. zu komprimieren.
Für die Überwachung des Mobilfunknetzes 3 sind in der Regel nur Daten von Interesse, die bestimme Kennwerte überschreiten und damit einen ungenügenden Netzzustand widerspiegeln. Folglich ist es sinnvoll, nur in diesem Fall die Meßwerte zu übertragen.
Für das Verarbeitungsmodul 5 heißt daß, es muß die Daten, die an der Meßdatenschnittstelle des Mobiltelefones 1 anliegen, mit vorgegebenen Schwellenwerten vergleichen. Nur bei einer Verletzung der angegebenen Grenzen sollten die Meßdaten mit den Positionsdaten verknüpft und an die Zentrale 4 übersenden werden.
Eine Reduktion der Datenmenge kann z.B. wie folgt erreicht werden:
- Um Versorgungslücken festzustellen, sind lediglich RxLEV-Meßwerte von Interesse, die einen bestimmten Mindestempfangspegel unterschreiten. Bei einer simulierten Inhouseversorgung muß der Schwellwert entsprechend erhöht werden.
- Um Stellen mit Interferenz zu lokalisieren, wird für RxQual ebenfalls ein bestimmter Schwellenwert eingestellt, so daß alle Werte, die diesen Schwellenwert unterschreiten, erfaßt werden.
- Um einen Gesprächsabbruch (Call Drop) zu protokollieren, werden bei einer entsprechender Meldung über eine ungewollte Gesprächsauslösung mit bestimmter Ursache die Daten der letzen 10 Messungen weiterverarbeitet.

Auch bei der Verwendung von Schwellenwerten, kann die erzeugte Datenmenge noch immer sehr umfangreich sein. Die bereits selektierten Meßdaten können dann durch weitere Vorverarbeitung und Komprimierung aufbereitet werden. Verschiedenste Möglichkeiten stehen hier für eine Datenkomprimierung zur Verfügung. Dies sind z.B.
- nur eine Aussage (im einfachsten Fall ein Datenbit für "Ja") über die Verletzung eines Schwellenwertes wird übertragen,
- nach einem Startwert (Übertragen des vollständigen, absoluten Wertes) werden nur noch Differenzwerte bezogen auf den Startwert übermitteln,
- nur jeder n-te Meßwert wird ausgewertet und übertragen (n = einstellbarer Parameter),
- die Ortsangabe (Positionsdaten) wird nach einem Startwert nur noch als Differenzangabe zu einer Anfangsposition übertragen.

Für den Mobilfunkbetreibern sind keine festen Schwellenwerte von Interesse, sondern es müssen variabel einstellbare Grenzwerte/Schranken sein, die eine individuelle Überwachung des Netzes oder bstimmten Netzbereichen zulassen. Es müssen also im Speicher- und Verarbeitungsmodul 5 die Parameter zur Auswertung und Komprimierung, so z.B. die Schwellenwerte, die Auswertungstaktrate und eine Möglichkeit der De-Aktivierung des Meßsystems von außen einstellbar sein.

Für diese Aufgabe eignet sich ebenfalls das Mobilfunknetz 3. Entweder wird der Initialisierungssatz mit den jeweiligen Parametern von der Datenerfassungszentrale 4 per SMS direkt an jedes Mobilfunktelefon 1 separat versendet oder man verwendet einen Kanal des Cell Broadcast.
Die Informationen des Cell Broadcast kann durch fast alle modernen Mobilfunktelefone ausgelesen werden. Dies hat den Vorteil, daß man alle Mobilfunktelefone 1 innerhalb einer Funkzelle gleichzeitig erreicht und zellindividuelle Parameter für jede Zelle oder für eine Menge von Zellen festlegen kann.

Für die Übertragung der Meßdaten per SMS an die Erfassungszentale 4 müssen die bereits ausgewerteten Meßdaten aufgearbeitet werden, da pro SMS nur maximal 160 Zeichen übertragen werden können.

### Folgendes Verfahren wäre möglich:

Jeder Kennwert (Empfangsfeldstärke, Empfangsqualität) wird mit einen fest zugeordneten Kennbuchstaben versehen, z.B. P = zweidimensionale Position mit Länge und Breite, E = Empfangsfeldstärke, Q = RxQual, etc.
Sind ein oder mehrere Schwellenwerte verletzt worden und steht eine Datenübertragung zur Datenerfassungszentrale 4 an, könnte sich das SMS-Zeichenfenster zusammensetzen aus:
- Beispielinhalt der SMS:: P 123456 123456 E 100 Q 5
- P =: Position (sekundengenaue Angabe, wobei die passende Höhenangabe bei Bedarf aus den Höhendatenbanken des Mobilfunkbetreiber gewonnen werden kann)
- E =: Empfangsfeldstärke (vorzeichenloser dBm-Wert)
- Q =: Qualität, Bitfehlerrate

Übertrifft die Anzahl der darzustellenden Zeichen (überschrittener Schwellenwerte) die maximal mögliche Zeichenanzahl (=160) einer SMS, wird eine zweite SMS erstellt, die wiederum mit der Position beginnt und dann die restlichen Parameter mit der entsprechenden Buchstabenkennung enthält.

Der Vorteil dieser Methode (variabler Inhalt, eindeutige Zuordnung des Meßwertes durch Buchstaben) liegt darin, daß bei der Überschreitung eines Meßwertes nicht alle gemessenen Werte in einer festen Reihenfolge übertragen werden müssen und sich damit die zu übertragende Datenmenge weiter reduziert. Weitere Verfahren sind möglich.

### Datenerfassungszentrale 4

Hier werden die vom Mobilteilnehmer empfangenen SMS-Nachrichten dekomprimiert und z.B. ortsbezogen in einer Datenbank abgelegt. Anschließend ist es möglich die Meßdaten nach verschiedenen Selektionskriterien auszuwerten und weiter zu verarbeiten.

## Patentansprüche

1. Verfahren zur Erfassung von Kenndaten eines Mobilfunksystems, mit den Schritten:
Erfassen von Positionsdaten beim Mobilfunkteilnehmer,
Übertragung der erfassten Daten über das Mobilfunksystem zu einer Datenerfassungszentrale (4);
**dadurch gekennzeichnet,**
**dass** zur Generierung der Kenndaten das Mobilfunkendgerät verwendet wird, das seine Messdaten zur weiteren Verarbeitung bereitstellt,
**daß** die bereitgestellten Kenndaten und die Positionsdaten an ein teilnehmerseitiges Speicher- und Verarbeitungsmodul (5) weitergeleitet, dort ausgewertet und aufbereitet werden,
**daß** die aufbereiteten Kenndaten im Verarbeitungsmodul (5) mit von der Zentrale (4) vorgegebenen Schwellwerten und/oder Parametern verglichen werden,
**daß** eine Datenübertragung zur Datenerfassungszentrale (4) nur erfolgt, wenn die vorgegebenen Schwellwerte oder Parameter der Kenndaten überschritten oder unterschritten werden, und
**daß** eine Verarbeitung und Verwaltung der übertragenen Daten in der Datenerfassungszentrale (4) erfolgt.

2. Verfahren nach Anspruch 1, **dadurch gekennzeichnet, daß** die Kenndaten vom Mobilfunkendgerät (1) sowohl während einer Verbindung als auch bei Betriebsbereitschaft erfasst werden.

3. Verfahren nach einem der Ansprüche 1 oder 2, **dadurch gekennzeichnet, daß** die Erfassung der Positionsdaten mittels eines Satellitennavigationsempfängers (6) erfolgt.

4. Verfahren nach einem der Ansprüche 1 - 3, **dadurch gekennzeichnet, daß** die aufbereiteten Kenn- und Positionsdaten über das Mobilfunkendgerät (1) per SMS zur Datenerfassungszentrale (4) gesendet werden.

5. Verfahren nach einem der Ansprüche 1 - 4, **dadurch gekennzeichnet, daß** die Kenn- und Positionsdaten im Speicher- und Verarbeitungsmodul (5) reduziert und/oder komprimiert werden.

6. Verfahren nach einem der Ansprüche 1 - 5, **dadurch gekennzeichnet, daß** als Kenndaten die Werte des Call Control, wie RxLEV, RxQUAL, Call Drop, Call Setup, verwendet werden.

7. Verfahren nach einem der Ansprüche 1 - 6, **dadurch gekennzeichnet, daß** Unterbrechungen einer Verbindung erfasst und weitergeleitet werden.

8. Verfahren nach einem der Ansprüche 1 - 7, **dadurch gekennzeichnet, daß** eine Reduktion der zu übertragenden Datenmenge dadurch erfolgt, daß nur eine Aussage über die Überschreitung/Unterschreitung des Schwellenwertes übertragen wird.

9. Verfahren nach einem der Ansprüche 1 - 8, **dadurch gekennzeichnet, daß** eine Reduktion der zu übertragenden Datenmenge dadurch erfolgt, daß nach Übertragung eines Startwerts nur noch Differenzwerte übermitteln werden.

10. Verfahren nach einem der Ansprüche 1 - 9, **dadurch gekennzeichnet, daß** eine Reduktion der zu übertragenden Datenmenge dadurch erfolgt, daß nur jeder n-te Meßwert ausgewertet und übertragen wird.

11. Verfahren nach einem der Ansprüche 1 - 10, **dadurch gekennzeichnet, daß** eine Reduktion der zu übertragenden Datenmenge dadurch erfolgt, daß die Positionsdaten nach einem Startwert nur noch als Differenzangabe übertragen werden.

12. Verfahren nach einem der Ansprüche 1 - 11, **dadurch gekennzeichnet, daß** die Schwellwerte und/oder Parameter von der Zentrale über das Mobilfunknetz (3) an das Speicher- und Verarbeitungsmodul (5) übertragen werden.

13. Verfahren nach einem der Ansprüche 1 - 12, **dadurch gekennzeichnet, daß** die Schwellwerte und Parametern per SMS individuell an jedes Mobilfunkendgerät (1) versendet werden.

14. Verfahren nach einem der Ansprüche 1 - 13, **dadurch gekennzeichnet, daß** die Schwellwerte und Parametern per Cell Broadcast an die Mobilfunkendgeräte (1) versendet werden.

15. Verfahren nach einem der Ansprüche 1 - 14, **dadurch gekennzeichnet, daß** die Meßdaten von echten Teilnehmern des jeweiligen Netzbetreibers stammen.

## Claims

1. Method for the logging of characteristic data of a cellular radio system, with the steps of:
logging of position data by the cellular radio subscriber, transmission of the logged data via the cellular radio system to a data logging centre (4);
**characterised in that** the cellular radio terminal which provides its measurement data for further processing is used for generation of the characteristic data, **in that** the characteristic data provided and the position data are transmitted to a storage and processing module (5) of the subscriber, there evaluated and edited, **in that** the edited characteristic data in the processing module (5) are compared with threshold values and/or parameters predetermined by the centre (4), **in that** data transmission to the data logging centre (4) is effected only when values exceed or fall below the predetermined threshold values or parameters of the characteristic data, and **in that** processing and management of the transmitted data are effected in the data logging centre (4).

2. Method according to claim 1, **characterised in that** the characteristic data are logged by the cellular radio terminal (1) both during a communication and when ready for operation.

3. Method according to one of claims 1 or 2, **characterised in that** logging of the position data is effected by means of a satellite navigation receiver (6).

4. Method according to one of claims 1 - 3, **characterised in that** the edited characteristic and position data are transmitted via the cellular radio terminal (1) by SMS to the data logging centre (4).

5. Method according to one of claims 1 - 4, **characterised in that** the characteristic and position data are reduced and/or compressed in the storage and processing module (5).

6. Method according to one of claims 1 - 5, **characterised in that** the values of call control, such as RxLEV, RxQUAL, call drop, call setup, are used as the characteristic data.

7. Method according to one of claims 1 - 6, **characterised in that** interruptions of a communication are logged and transmitted.

8. Method according to one of claims 1 - 7, **characterised in that** a reduction of the data quantity to be transmitted is effected by the fact that only one statement on exceeding/falling below the threshold value is transmitted.

9. Method according to one of claims 1 - 8, **characterised in that** a reduction of the data quantity to be transmitted is effected by the fact that after transmission of a start value only difference values are transmitted.

10. Method according to one of claims 1 - 9, **characterised in that** a reduction of the data quantity to be transmitted is effected by the fact that only every nth measured value is evaluated and transmitted.

11. Method according to one of claims 1 - 10, **characterised in that** a reduction of the data quantity to be transmitted is effected by the fact that the position data are transmitted after a start value only as an indication of difference.

12. Method according to one of claims 1 - 11, **characterised in that** the threshold values and/or parameters are transmitted from the centre via the cellular radio network (3) to the storage and processing module (5).

13. Method according to one of claims 1 - 12, **characterised in that** the threshold values and parameters are transmitted by SMS individually to each cellular radio terminal (1).

14. Method according to one of claims 1 - 13, **characterised in that** the threshold values and parameters are transmitted by cell broadcast to the cellular radio terminals (1).

15. Method according to one of claims 1 - 14, **characterised in that** the measurement data originate from genuine subscribers of the respective network operator.

## Revendications

1. Procédé pour enregistrer des données d'identification d'un système radiotéléphonique mobile, consistant à :
- enregistrer des données de position au niveau de l'abonné mobile, et à
- transmettre les données enregistrées à un central d'enregistrement de données (4) par l'intermédiaire du système radiotéléphonique mobile ;
**caractérisé en ce que** pour générer les données d'identification, on utilise le terminal mobile, qui fournit ses données de mesure en vue d'un traitement ultérieur,
**en ce que** les données d'identification fournies et les données de position sont transmises à un module de mémoire et de traitement (5) prévu côté abonné et sont évaluées et traitées dans celui-ci,
**en ce que** les données d'identification traitées sont comparées dans le module de traitement (5) à des valeurs seuils et/ou paramètres prédéfinis par le central (4),
**en ce qu'**une transmission des données au central d'enregistrement de données (4) n'a lieu que si on atteint des valeurs supérieures ou inférieures aux valeurs seuils ou paramètres prédéfinis des données d'identification, et
**en ce qu'**un traitement et une gestion des données transmises ont lieu dans le central d'enregistrement de données (4).

2. Procédé selon la revendication 1, **caractérisé en ce que** les données d'identification sont enregistrées par le terminal mobile (1) aussi bien pendant une communication qu'en position opérationnelle.

3. Procédé selon la revendication 1 ou 2, **caractérisé en ce que** l'enregistrement des données de position se fait à l'aide d'un récepteur de navigation par satellite (6).

4. Procédé selon l'une des revendications 1 à 3, **caractérisé en ce que** les données d'identification et de position traitées sont envoyées par l'intermédiaire du terminal mobile (1), par SMS, au central d'enregistrement de données (4).

5. Procédé selon l'une des revendications 1 à 4, **caractérisé en ce que** les données d'identification et de position sont réduites et/ou comprimées dans le module de mémoire et de traitement (5).

6. Procédé selon l'une des revendications 1 à 5, **caractérisé en ce qu'**on utilise comme données d'identification les valeurs du Call Control (commande d'appel) comme RxLEV, RxQUAL, Call Drop (interruption de communication), Call Setup (établissement d'une communication).

7. Procédé selon l'une des revendications 1 à 6, **caractérisé en ce que** les interruptions d'une communication sont enregistrées et transmises.

8. Procédé selon l'une des revendications 1 à 7, **caractérisé en ce qu'**une réduction de la quantité de données à transmettre a lieu grâce au fait que seule une information indiquant qu'on a atteint une valeur supérieure/inférieure à la valeur seuil est transmise.

9. Procédé selon l'une des revendications 1 à 8, **caractérisé en ce qu'**une réduction de la quantité de données à transmettre a lieu grâce au fait qu'après la transmission d'une valeur de départ, on ne transmet plus que les valeurs différentielles.

10. Procédé selon l'une des revendications 1 à 9, **caractérisé en ce qu'**une réduction de la quantité de données à transmettre a lieu grâce au fait que seule une valeur de mesure sur n est évaluée et transmise.

11. Procédé selon l'une des revendications 1 à 10, **caractérisé en ce qu'**une réduction de la quantité de données à transmettre a lieu grâce au fait que les données de position ne sont plus transmises, après une valeur de départ, que comme indication de différence.

12. Procédé selon l'une des revendications 1 à 11, **caractérisé en ce que** les valeurs seuils et/ou paramètres sont transmis par le central, par l'intermédiaire du réseau radiotéléphonique mobile (3), au module de mémoire et de traitement (5).

13. Procédé selon l'une des revendications 1 à 12, **caractérisé en ce que** les valeurs seuils et paramètres sont envoyés à chaque terminal mobile (1) individuellement par SMS.

14. Procédé selon l'une des revendications 1 à 13, **caractérisé en ce que** les valeurs seuils et les paramètres sont envoyés aux terminaux mobiles (1) par radiocommunication cellulaire.

15. Procédé selon l'une des revendications 1 à 14, **caractérisé en ce que** les données de mesure proviennent de véritables abonnés de l'exploitant de réseau respectif.
